**Europäisches Patentamt**

**European Patent Office**

**Office européen des brevets**

(19)

(11) Veröffentlichungsnummer: **0 276 663 B1**

(12) **EUROPÄISCHE PATENTSCHRIFT**

(45) Veröffentlichungstag der Patentschrift: **24.04.91**

(51) Int. Cl.5: **G01C 21/16, G01C 25/00**

(21) Anmeldenummer: **88100218.2**

(22) Anmeldetag: **09.01.88**

(54) **Einrichtung zur Bestimmung der zeitlich veränderlichen Lage und von Fehlern eines Tochternavigationssystems relativ zu einem Mutternavigationssystem.**

(30) Priorität: **21.01.87 DE 3701583**

(43) Veröffentlichungstag der Anmeldung:
**03.08.88 Patentblatt 88/31**

(45) Bekanntmachung des Hinweises auf die
Patenterteilung:
**24.04.91 Patentblatt 91/17**

(84) Benannte Vertragsstaaten:
**DE FR GB SE**

(56) Entgegenhaltungen:
**EP-A- 0 179 197**
**EP-A- 0 184 632**

**IEEE TRANS. ON AEROSPACE & ELECTR. SYST., Band AES-16, Nr. 1, Januar 1980, Seiten 53-65, IEEE, New York, US; I.Y. BAR-ITZHACK et al.: "Accurate INS transfer alignment using a monitor gyro and external navigation measurements"**

**REVIEW OF SCIENTIFIC INSTR., Band 51, Nr. 3, März 1980, Seiten 583-590, IEEE, New York, US; Dr. J.W. DIESEL: "Fundamental accuracy limitations in in-flight alignment of inertial navigators"**

(73) Patentinhaber: **Bodenseewerk Gerätetechnik GmbH**
**Alte Nussdorfer Strasse 15 Postfach 1120**
**W-7770 Überlingen/Bodensee(DE)**

(72) Erfinder: **Boch, Wolfgang, Dipl.-Ing.**
**Brühlstrasse 36**
**W-7777 Salem-Mimmenhausen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

**Beschreibung**

TECHNISCHES GEBIET

Die Erfindung betrifft eine Einrichtung zur Bestimmung der zeitlich veränderlichen relativen Lage eines Mutter-und eines Tochternavigationssystems, die beide Trägheitssensoren zur Beschleunigung- und Winkelgeschwindigkeitsmessung aufweisen, und zur Bestimmung von Sensorfehlern des Tochternavigationssystems, enthaltend

a) ein erstes Filter, auf welches

- die Differenzen der in Mutter- und Tochternavigationssystem gemessenen Beschleunigungen
- die im Mutternavigationssystem gemessenen Winkelgeschwindigkeiten und
- die im Tochternavigationssystem gemessenen Winkelgeschwindigkeiten
  aufgeschaltet sind und welches
- Schätzwerte für Fehlerparameter des Tochternavigationssystems verglichen mit dem Mutternavigationssystem liefert, und

b) ein als Kalmanfilter ausgebildetes zweites Filter, auf welches

- die Differenzen der in Mutter- und Tochternavigationssystem gemessenen Beschleunigungen,
- die im Mutternavigationssystem gemessenen Winkelgeschwindigkeiten und
- Winkelgeschwindigkeitswerte aufgeschaltet sind, welche aus den im Tochternavigationssystem gemessenen Winkelgeschwindigkeiten abgeleitet sind
  und welches
- Schätzwerte für die Lageparameter des Tochternavigationssystems relativ zu dem Mutternavigationssystem
  liefert.

Insbesondere bezieht sich die Erfindung auf Trägheitsnavigationssysteme. Trägheitsnavigationssysteme bestimmen die Position eines Fahrzeugs oder Flugzeugs im Raum durch zweimalige zeitliche Integration der gemessenen Beschleunigungswerte. Sie enthalten Beschleunigungsmesser und zusätzlich Drehgeschwindigkeitssensoren, durch welche die Lage des Trägheitsnavigationssystems im Raum und damit die Richtungen der gemessenen Beschleunigungswerte bestimmt werden. Es gibt Fälle, in denen ein Mutternavigationssystem und Tochternavigationssystem vorgesehen sind, die sich gegeneinander bewegen können, wobei aber deren gegenseitige Bewegung bestimmt werden muß.

Ein Beispiel hierfür sind Flugzeuge, bei denen mehrere Trägheitsnavigationssysteme redundant an voneinander entfernten, miteinander flexibel verbundenen Stellen des Flugzeugs angebracht sind. Durch Lageänderungen des Flugzeugs und durch Verwindungen der Flugzeugzelle können jedoch die Sensoren der beiden Trägheitsnavigationssysteme unterschiedliche Signale liefern. Es ist wichtig, die relative Lage der beiden Trägheitsnavigationssysteme zueinander laufend zu erfassen.

Eine weitere Anwendung ist der Vergleich der Meßwerte eines in einem Flugzeug vorgesehenen Trägheitsnavigationssystems als Mutter-Trägheitsnavigationssystem mit einem Tochter-Trägheitsnavigationssystem, das in einem an dem Flugzeug angebrachten Flugkörper vorgesehen ist. Im Flugzeug selbst ist als Mutter-Trägheitsnavigationssystem üblicherweise ein Trägheitsnavigationssystem mit Sensoren hoher Güte, also beispielsweise sehr geringer Kreiseldrift, vorgesehen. Für Flugkörper wird üblicherweise aus Kostengründen ein Trägheitsnavigationssystem wesentlich geringerer Güte verwendet.

Es ist erforderlich, vor dem Einsatz das Tochter-Trägheitsnavigationssystem in bezug auf das Muttersystem auszurichten, dessen Lage im erdfesten Navigationsreferenzsystem jederzeit bekannt ist.

Es muß dazu die zeitlich veränderliche Orientierung des Tochter-Trägheitsnavigationssystems im Vergleich zu einem Mutter-Trägheitsnavigationssystem ausgehend von einem unbekannten Ausgangszustand kontinuierlich bestimmt werden. Da die Trägheitssensoren des Tochter-Trägheitsnavigationssystems, wie gesagt, oft von geringerer Güte als die des Mutter-Trägheitsnavigationssystems sind, sind diese Trägheitssensoren mit Fehlern behaftet. Die Fehlerparameter des Tochter-Trägheitsnavigationssystems müssen bestimmt werden.

**Zugrundeliegender Stand der Technik**

Durch die DE-A-34 45 463 ist eine Anordnung zur Initialisierung oder Rekalibrierung eines Tochter-Trägheitsnavigationssystems durch Vergleich mit einem Mutter-Trägheitsnavigationssystem bekannt. Zu diesem Zweck ist einmal ein nach der Methode der kleinsten Fehlerquadrate arbeitendes erstes Filter vorgesehen. Dieses erste Filter enthält ein Modell, welches die gegenseitigen Beziehungen der beiden Trägheitsnavigationssysteme nachbildet. Das erste Filter enthält ein Modell, welches die gegenseitigen Beziehungen der beiden Trägheitsnavigationssysteme nachbildet. Auf das Filter sind die Differenzen der einander entsprechenden Meßgrößen von Mutter- und Tochter-Trägheitsnavigationssystem aufgeschaltet. Das erste Filter liefert Schätzwerte der Sensorfehler, die dann bei der Signalverarbeitung des Tochter-Trägheitsnavigationssystems berücksichtigt werden, ein zweites Filter ist ein Kalmanfilter. Auf dieses Kalmanfilter sind ebenfalls die Differenzen einander entsprechender Meßgrößen von Mutter- und Tochter-Trägheitsnavigationssystem aufgeschaltet. Das Kalmanfilter liefert Schätzwerte der Ausrichtwinkel. Die Anordnung nach der DE-A-34 45 463 erfordert ein Modell der relativen Bewegung zwischen Mutter- und Tochternavigationssystem. Der erforderliche Rechnaufwand ist erheblich.

Durch die EP-A-179 197 ist eine Anordnung zur Bestimmung der zeitlich veränderlichen Lage und von Fehlern eines Tochternavigationssystems relativ zu einem Mutternavigationssystem bekannt. Bei dieser bekannten Anordnung werden aus den Differenzen der im Mutter- und im Tochternavigationssystem gemessenen Winkelgeschwindigkeiten durch Integration mittels integrierender Mittel Schätzwerte für die Lageparameter, nämlich die relativen Lagewinkel zwischen Mutter- und Tochternavigationssystem gewonnen. Mit diesen Schätzwerten der Lagewinkel werden die im Tochternavigationssystem gemessenen Beschleunigungen durch Koordinatentransformationsmittel in das Koordinatensystem des Mutternavigationssystems transformiert. Die so erhaltenen transformierten Beschleunigungen werden mit den im Mutternavigationssystem gemessenen Beschleunigungen verglichen. Die Differenz bildet die Eingangsgröße für ein Kalmanfilter. Dieses Kalmanfilter bildet ein Fehlermodell des Tochternavigationssystems nach und gibt Korrektursignale auf den Eingang der integrierenden Mittel, welche der Differenz der Winkelgeschwindigkeiten überlagert sind. Gleichzeitig liefert das Kalmanfilter Schätzwerte für die Fehlerparameter der Sensoren des Tochternavigationssystems.

Bei der EP-A-179 197 ist das Kalmanfilter ein Kalmanfilter neunter Ordnung: Der Vektor der Schätzwerte enthält die drei Lagewinkel sowie die bei der Messung der Winkelgeschwindigkeiten im Tochternavigationssystem auftretenden jeweils drei Nullpunkt- und Skalenfaktorfehler. Die Schätzwerte von Lagewinkeln und Fehlerparametern werden mit einem Kalmanfilter gleichzeitig bestimmt. Dies geschieht in festen "Filter-Updateintervallen", d.h. festen Intervallen zwischen aufeinanderfolgenden Verarbeitungszeitpunkten von Beschleunigungsmeßwerten.

Dabei ergeben sich jedoch gewisse Schwierigkeiten:

Sollen die dynamischen Lagewinkel zwischen Mutter- und Tochternavigationssystem geschätzt werden, so muß die Frequenz des Rechenzyklus des Schätzverfahrens nach dem Abtasttheorem von Shannon mindestens um den Faktor zwei höher gewählt werden als die Eigenfrequenz des Systems. Im Falle eines Tochternavigationssystems, das in einem an der Tragfläche angebrachten Flugkörper sitzt, ist als Eigenfrequenz des Systems die Frequenz der Tragflügeleigenschwingungen zu berücksichtigen. Diese Frequenz liegt bei 6 - 8 Hertz. Realistisch sind somit Filter-Updatefrequenzen von 50 - 100 Hertz anzusetzen.

Überschlagsrechnungen ergeben, daß sich Kreiseldriften von einigen $100^{\circ}$ pro Stunde in den zu schätzenden Lagewinkeln in der Zeit zwischen zwei aufeinanderfolgenden Verarbeitungszeitpunkten der Beschleunigungssignale ("Filter-Update") nur in Bruchteilen von Milliradiant auswirken. Es ergibt sich somit, wenn man nicht extreme Anforderungen an die Güte der Beschleunigungsmessung stellen will, kein sehr deutlicher Meßeffekt z. B. zur Schätzung der Kreiseldriften der genannten Größenordnung.

## Offenbarung der Erfindung

Der Erfindung liegt die Aufgabe zugrunde, eine Einrichtung der eingangs genannten Art zu schaffen. welche sowohl Schätzwerte für die Lagewinkel mit der erforderlichen Abtastfrequenzen liefert als auch hinreichend genaue Schätzwerte für die Fehlerparameter der Sensoren des Tochternavigationssystems.

Erfindungsgemäß wird diese Aufgabe dadurch gelöst, daß

c) das erste Filter ebenfalls als Kalmanfilter ausgebildet ist und

d) in dem ersten Kalmanfilter die Intervalle zwischen zwei aufeinanderfolgenden Verarbeitungszeitpunkten von Beschleunigungsmeßwerten gegenüber den entsprechenden Intervallen des zweiten Kalmanfilters wesentlich verlängert sind.

Das erste Kalmanfilter kann dabei nach Art der EP-A-179 197 aufgebaut sein. Es liefert Schätzwerte für die Sensorfehler. Die Schätzgenauigkeit dieser Schätzwerte ist gut, da die Filter-Updateintervalle für dieses erste Kalmanfilter hinreichend lang gemacht werden. Dieses Kalmanfilter liefert aber eben wegen dieser langen Filter-Updateintervalle keine genaue Information über die Lagewinkel zwischen Mutter- und Tochternavigationssystem. Die Relativbewegung während jedes Filter-Updateintervalls ist zu groß. Deshalb ist ein zweites Kalmanfilter vorgesehen, das nur die Lagewinkel liefert aber mit einem hinreichend kurzen Filter-Updateintervall.

Mutter- und Tochternavigationssystem haben sich während eines solchen kurzen Filter-Updateintervalls nur in vernachlässigbarem Maße gegeneinander bewegt.

Im Gegensatz zu der EP-A-179 197 können mit der erfindungsgemäßen Einrichtung auch die Sensorfehler mit hoher Schätzgenauigkeit erhalten werden, da für Sensorfehler und Lagewinkel zwei mit unterschiedlichen Filter-Updateintervallen arbeitende Kalmanfilter vorgesehen sind. Der Rechenaufwand ist geringer, da statt eines Kalmanfilters neunter Ordnung zwei Kalmanfilter dritter Ordnung vorgesehen sind, die zudem ähnliche Struktur aufweisen.

Im Gegensatz zu der DE-A-34 45 463 setzt die erfindungsgemäße Einrichtung keine Kenntnisse über ein Modell der gegenseitigen Beziehungen von Mutter- und Tochternavigationssystem voraus. Die Daten dieses Modells werden vielmehr aus dem als Kalmanfilter ausgebildeten ersten Filter selbst gewonnen. Durch die in der DE-A-34 45 463 nicht angesprochenen unterschiedlichen Filter-Updateintervalle wird die hohe Schätzgenauigkeit für die Sensorfehler erhalten.

Es können Mittel zur Sensorfehlerkompensation vorgesehen sein, auf welche
- die im Tochternavigationssystem gemessenen Winkelgeschwindigkeiten und
- die von dem ersten Kalmanfilter gelieferten Schätzwerte für die Fehlerparameter des Tochternavigationssystems
aufgeschaltet sind und welche
- die besagten verbesserten Winkelgeschwindigkeitswerte liefert, die aus den im Tochternavigationssystem gemessenen Winkelgeschwindigkeiten abgeleitet und auf das zweite Kalmanfilter aufgeschaltet sind.

## KURZE BESCHREIBUNG DER ZEICHNUNG

Ein Ausführungsbeispiel der Erfindung ist nachstehend unter Bezugnahme auf die zugehörigen Zeichnungen näher erläutert.

Fig. 1
zeigt schematisch in Form eines Blockdiagramms ein Mutter- und ein Tochternavigationssystem sowie eine Einrichtung zur Bestimmung der zeitlich veränderlichen relativen Lage des Mutter-und Tochternavigationssystems und zur Bestimmung von Sensorfehlern des Tochternavigationssystems.

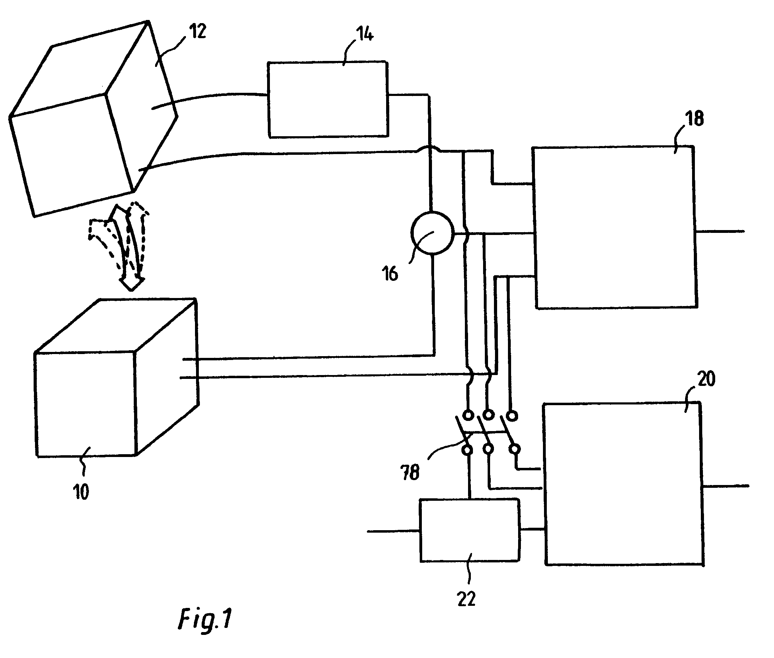

Fig. 2
zeigt die Struktur des ersten Kalmanfilters in der Einrichtung von Fig. 1.

Fig. 3
zeigt die Struktur des zweiten Kalmanfilters in der Einrichtung von Fig. 1.

## BEVORZUGTE AUSFÜHRUNG DER ERFINDUNG

Mit 10 ist in Fig. 1 ein als Trägheitsnavigationssystem ausgebildetes Mutternavigationssystem bezeichnet. Mit 12 ist ein ebenfalls als Trägheitsnavigationssystem ausgebildetes Tochternavigationssystem bezeichnet. Der Anschaulichkeit halber sei angemommen, daß das Mutternavigationssystem 10 in einem Flugzeug angeordnet ist, während das Tochternavigationssystem 12 in einem Flugkörper sitzt, der an einer Tragfläche des Flugzeugs angebracht ist.

Das Mutternavigationssystem 10 hat eine wesentlich höhere Güte als das Tochternavigationssystem 12. Es wird daher angenommen, daß das Mutternavigationssystem 10 fehlerfrei ist und Abweichungen - außer auf Relativbewegungen der beiden Navigationssysteme - auf Sensorfehler des Tochternavigationssystems zurückzuführen sind.

Das Mutternavigationssystem 10 liefert als Ausgangssignale die Komponenten eines Winkelgeschwindigkeitsvektors $\underline{\omega}\,^{M}_{IM}$ und eines Beschleunigungsvektors $\underline{a}\,^{M}_{IM}$. Die Unterstreichung bedeutet jeweils, daß es sich um einen Vektor handelt. Der obere Index "M" bedeutet, daß es sich um Winkelgeschwindigkeiten und Beschleunigungen handelt, die mit den Winkelgeschwindigkeits- bzw. Beschleunigungssensoren des Mutternavigationssystems 10 gemessen wurden. Der untere Index "IM" weist darauf hin, daß die Vektoren die Winkelgeschwindigkeit des Mutternavigationssystems 10 ("M") gegenüber dem inertialen Raum ("I") wiedergeben.

Die in dem Vektor $\underline{a}\,^{M}_{S}$ zusammengefaßten Beschleunigungssignale werden durch Signalverarbeitungsmittel 14 hinsichtlich zwischen Mutternavigationssystem und Tochternavigationssystem bestehender Hebelarme korrigiert. Wenn Mutternavigationssystem 10 und Tochternavigationssystem 12 in räumlichem Ab-

4

stand voneinander angeordnet sind, z.B. im Flugzeugrumpf und in einem Flugkörper an der Tragfläche, dann würden in den beiden Navigationssystemen bei Auftreten einer Winkelgeschwindigkeit auch dann unterschiedliche lineare Beschleunigungen in den verschiedenen Koordinatenrichtungen gemessen, wenn die Verbindung zwischen Mutternavigationssystem 10 und Tochternavigationssystem 12 absolut starr und die räumliche Orientierung der Achsen in beiden Navigationssystemen die gleiche wäre. Diese Einflüsse der Hebelarme werden durch die Signalverarbeitungsmittel 14 kompensiert. In einem "Summationspunkt" 16 wird die Differenz $\Delta$ a des so korrigierten Beschleunigungsvektors des Tochternavigationssystems 12 und des Beschleunigungsvektors $a_M^M$ des Mutternavigationssystems 10 gebildet Dieser Differenzvektor $\Delta$ a der Beschleunigungen ist auf ein erstes Kalmanfilter 18 geschaltet. Das erste Kalmanfilter 18 erhält weiterhin den Winkelgeschwindigkeitsvektor $\omega_{iS}^S$ des Tochternavigationssystems 12 und den Winkelgeschwindigkeitsvektor $\omega_{iM}^M$ des Mutternavigationssystems. Das erste Kalmanfilter 18 liefert Schätzwerte für Fehlerparameter des Tochternavigationssystems, nämlich Schätzwerte $\widehat{DSF}$ für die Skalenfaktorfehler DSF und Schätzwerte $\widehat{B}$ für die Nullpunktfehler B. Skalenfaktorfehler und Nullpunktfehler sind Vektoren aus je drei Komponenenten, nämlich den skalaren Skalenfaktorfehlern und Nullpunktfehlern für die drei Koordinatenachsen. Weiterhin liefert das Kalmanfilter 18 Schätzwerte für die Lageparameter, d.h. die relativen Lagewinkel zwischen Tochternavigationssystem und Mutternavigationssystem. Diese Lageparameter sind durch einen Vektor $\Delta\Phi$ und die Schätzwerte durch einen Vektor

$$\Delta \hat{\Phi}$$

dargestellt.

Es ist weiterhin ein zweites Kalmanfilter 20 vorgesehen. Auf dieses sind ebenfalls der Differenzvektor $\Delta$ a der Beschleunigungen und der Winkelgeschwindigkeitsvektor $\omega_{iM}^M$ des Mutternavigationssystems 10 aufschaltbar. Weiterhin erhält das zweite Kalmanfilter 20 Winkelgeschwindigkeitswerte, die aus den im Tochternavigationssystem 12 gemessenen, durch den Vektor $\omega_{iS}^S$ dargestellten Winkelgeschwindigkeiten abgeleitet sind. Die gemessenen Winkelgeschwindigkeiten $\omega_{iS}^S$ von dem Tochternavigationssystem 12 sind auf Signalverarbeitungsmittel 22 aufgeschaltet. Diese Signalverarbeitungsmittel 22 erhalten auch die Schätzwerte $\widehat{B}$ und $\widehat{DSF}$ der Fehlerparameter B und DSF der Trägheitssensoren, d.h. der Kreisel des Tochternavigationssystems 12. Diese Schätzwerte $\widehat{B}$ und $\widehat{DSF}$ werden von dem ersten Kalmanfilter 18 geliefert. Es werden also die von dem Tochternavigationssystem 12 gelieferten, fehlerhaften Winkelgeschwindigkeits-Meßwerte hinsichtlich der systematischen Fehler korrigiert und damit verbessert. Die so korrigierten Winkelgeschwindigkeitswerte werden von den Signalverarbeitungsmitteln 22 auf das zweite Kalmanfilter 20 aufgeschaltet. Das zweite Kalmanfilter 20 liefert Schätzwerte für die Lageparameter, d.h. die relativen Lagewinkel, die wieder durch einen Vektor

$$\Delta \hat{\Phi}$$

dargestellt sind.

Das erste Kalmanfilter 18 ist nach Art der EP-A-179 197 aufgebaut. Es ist ein Kalmanfilter neunter Ordnung, das durch folgende Zustandsgleichung

$$(1)\begin{bmatrix}\dot\varphi\\\dot\vartheta\\\dot\psi\\\dot B_X\\\dot B_Y\\\dot B_Z\\\dot{DSF}_X\\\dot{DSF}_Y\\\dot{DSF}_Z\end{bmatrix}=\begin{bmatrix}0 & \bar\omega_Z^S & -\omega_Y^M & -1 & 0 & 0 & -\bar\omega_X^S & 0 & 0\\-\bar\omega_Z^S & 0 & \omega_X^M & 0 & -1 & 0 & 0 & -\bar\omega_Y^S & 0\\\bar\omega_Y^S & -\omega_X^M & 0 & 0 & 0 & -1 & 0 & 0 & -\bar\omega_Z^S\\0 & 0 & 0 & 0 & 0 & 0 & 0 & 0 & 0\\0 & 0 & 0 & 0 & 0 & 0 & 0 & 0 & 0\\0 & 0 & 0 & 0 & 0 & 0 & 0 & 0 & 0\\0 & 0 & 0 & 0 & 0 & 0 & 0 & 0 & 0\\0 & 0 & 0 & 0 & 0 & 0 & 0 & 0 & 0\\0 & 0 & 0 & 0 & 0 & 0 & 0 & 0 & 0\end{bmatrix}\cdot\begin{bmatrix}\varphi\\\vartheta\\\psi\\B_X\\B_Y\\B_Z\\DSF_X\\DSF_Y\\DSF_Z\end{bmatrix}+\begin{bmatrix}\bar\omega_X^S-\omega_X^M\\\bar\omega_Y^S-\omega_Y^M\\\bar\omega_Z^S-\omega_Z^M\\0\\0\\0\\0\\0\\0\end{bmatrix}+\begin{bmatrix}n_X\\n_Y\\n_Z\\0\\0\\0\\0\\0\\0\end{bmatrix}$$

und folgende Meßgleichung

$$(2)\quad\begin{bmatrix}\bar a_x^S - a_x^M\\\bar a_y^S - a_y^M\\\bar a_z^S - a_z^M\end{bmatrix}=\begin{bmatrix}H_1 & [0] & [0]\end{bmatrix}\cdot\begin{bmatrix}\underline{\Phi}\\\underline{B}\\\underline{DSF}\end{bmatrix}+\begin{bmatrix}r_x\\r_y\\r_z\end{bmatrix}$$

mit

$$(3)\quad H_1=\begin{bmatrix}0 & -a_z^M & a_y^M\\a_z^M & 0 & -a_x^M\\-a_y^M & a_x^M & 0\end{bmatrix}$$

beschrieben werden kann.

Das zweite Kalmanfilter 20 ist ein Kalmanfilter dritter Ordnung. Es liefert nur Schätzwerte für die Lageparameter. Das zweite Kalmanfilter 20 kann durch die Zustandsgleichung

EP 0 276 663 B1

$$(4) \quad \begin{bmatrix} \dot{\varphi} \\ \dot{\vartheta} \\ \dot{\psi} \end{bmatrix} = \begin{bmatrix} 0 & \bar{\omega}_z^S & -\omega_y^M \\ -\bar{\omega}_z^S & 0 & \omega_x^M \\ \bar{\omega}_y^S & -\omega_x^M & 0 \end{bmatrix} \cdot \begin{bmatrix} \varphi \\ \vartheta \\ \psi \end{bmatrix} + \begin{bmatrix} \bar{\omega}_x^S - \omega_x^M & n_x \\ \bar{\omega}_y^S - \omega_y^M + & n_y \\ \bar{\omega}_z^S - \omega_z^M & n_z \end{bmatrix}$$

und die Meßgleichung

$$(5) \quad \begin{bmatrix} \bar{a}_x^S - a_x^M \\ \bar{a}_y^S - a_y^M \\ \bar{a}_z^S - a_z^M \end{bmatrix} = \begin{bmatrix} H_1 \end{bmatrix} \cdot \begin{bmatrix} \Phi \end{bmatrix} + \begin{bmatrix} r_x \\ r_y \\ r_z \end{bmatrix}$$

mit

$$(6) \quad H_1 = \begin{bmatrix} 0 & -a_z^M & a_y^M \\ a_z^M & 0 & -a_x^M \\ -a_y^M & a_x^M & 0 \end{bmatrix}$$

7

beschrieben werden.

Dabei sind

$\phi, \vartheta, \psi$

die dynamischen, d.h. zeitlich veränderlichen, Lagewinkel des Tochternavigationssystems relativ zu dem Mutternavigationssystem,

$B_x, B_y, B_z$

die Nullpunktfehler bei der Messung der drei Komponenten der Winkelgeschwindigkeit im Tochternavigationssystem, wobei diese Nullpunktfehler zusammen den Vektor $\underline{B}$ bilden.

$DSF_x, DSF_y, DSF_z$

die Skalenfaktorfehler bei der Messung der drei Komponenten der Winkelgeschwindigkeit im Tochternavigationssystem, wobei diese Skalenfaktorfehler zusammen den Vektor $\underline{DSF}$ bilden;

$\bar{\omega}_x^S, \bar{\omega}_y^S, \bar{\omega}_z^S$

die in dem Tochternavigationssystem erhaltenen Meßwerte für die drei Komponenten der Winkelgeschwindigkeit, wobei der Strich die erhaltenen -fehlerbehafteten - Meßwerte unterscheidet von den real auftretenden Komponenten der Winkelgeschwindigkeit,

$\omega_x^M, \omega_y^M, \omega_z^M$

die in dem Mutternavigationssystem auftretenden Komponenten der Winkelgeschwindigkeit, die in dem Vektor $\underline{\omega}_M^M$ zusammengefaßt sind, wobei die im Mutternavigationssystem erhaltenen Meßwerte dieser Komponenten als gleich den real auftretenden Komponenten angenommen sind,

$n_x, n_y, n_z$

die Komponenten des Rauschens,

$\bar{a}_x^S, \bar{a}_y^S, \bar{a}_z^S$

die in dem Tochternavigationssystem erhaltenen Meßwerte für die drei Komponenten der Beschleunigung, wobei der Strich wieder die erhaltenen - fehlerbehafteten - Meßwerte unterscheidet von den real auftretenden Komponenten der Beschleunigung,

$a_x^M, a_y^M, a_z^M$

die in dem Mutternavigationssystem auftretenden Komponenten der Beschleunigung, die in dem Vektor $\underline{a}_M^M$ zusammengefaßt sind, wobei wieder die im Mutternavigationssystem erhaltenen Meßwerte dieser Komponenten als gleich den real auftretenden Komponenten angenommen sind,

$r_x, r_y, r_z$

die Komponenten des Beschleunigungsmesserrauschens.

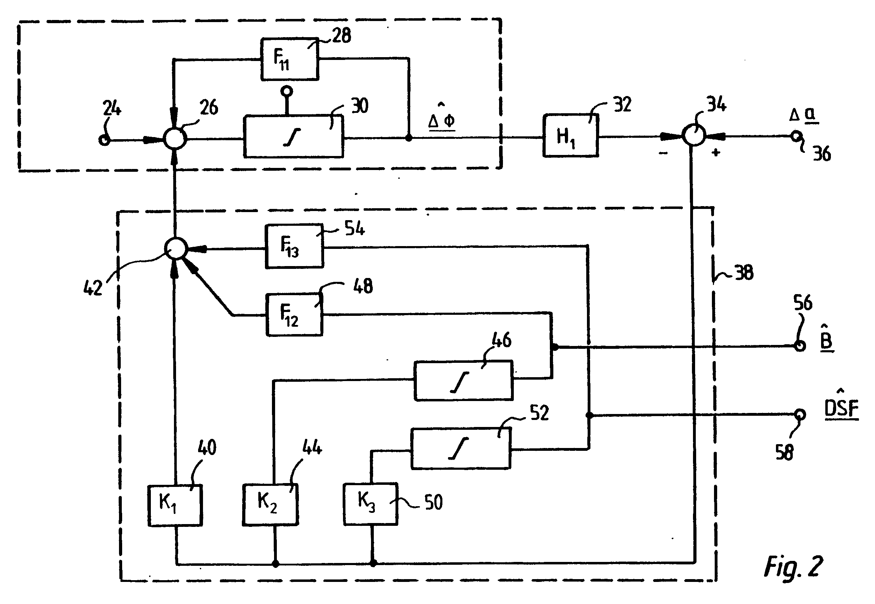

Fig. 2 zeigt die Struktur des Kalmanfilters 18 in kontinuierlicher Darstellung.

An einem Eingang 24 erscheint ein Vektor $u_1$, der von den Differenzen der im Mutter- und im Tochternavigationssystem gemessenen Komponenten der Winkelgeschwindigkeiten, gebildet ist

$$(7) \qquad \underline{u}_1 = \begin{bmatrix} \bar{\omega}_X^S - \omega_X^M \\ \bar{\omega}_Y^S - \omega_Y^M \\ \bar{\omega}_Z^S - \omega_Z^M \end{bmatrix}$$

Diesem Vektor $u_1$ ist an einem "Summierpunkt" 26 ein mit einer Matrix $F_{11}$ multiplizierter Schätzwert $\hat{\Phi}$ des Vektors $\Phi$ der relativen Lagewinkel überlagert. Die Matrix $F_{11}$ ist die Matrix, die von den ersten drei Spalten der ersten drei Zeilen der Matrix in der Zustandsgleichung (1) gebildet ist. Die Matrix $F_{11}$ ist durch einen Block 28 dargestellt. Der an dem "Summierpunkt" 26 erhaltene Vektor wird integriert durch Integration jedes seiner Elemente, was durch Block 30 dargestellt ist. Dadurch wird der besagte Schätzwert $\Delta\hat{\Phi}$ der Lagewinkel erhalten. Die Integration erfolgt mit einem geschätzten Anfangsvektor $\Delta\Phi(0)$.

Der Schätzwert $\Delta\hat{\Phi}$ wird mit der Meßmatrix $H_1$ gemäß der Meßgleichung (2) multipliziert, wie durch Block 32 dargestellt ist. Der so erhaltene Vektor wird in einem Summierpunkt 34 von dem Vektor $\Delta\underline{a}$ (Fig. 1) subtrahiert, der an einem Eingang 36 anliegt. Die Differenz liefert die Eingangsgrößen für den optimalen Schätzer 38.

Wenn die geschätzten Winkel $\bar{\phi}, \bar{\vartheta}, \bar{\psi}$ des Vektors $\Delta\Phi$ der Realität entsprächen, dann würde $H_1 \cdot \Delta\hat{\Phi}$ mit den als fehlerfrei angenommenen, gemessenen Elementen der Meßmatrix $H_1$, die ja Beschleunigungskomponenten im Mutternavigationssystem sind, einen dem Vektor $\Delta\underline{a}$ entsprechenden Vektor ergeben. Der Summierpunkt 34 würde einen Nullvektor liefern. Der an dem Summierpunkt 34 tatsächlich auftretende Vektor liefert daher ein Maß für die Abweichung von Modell und Realität.

Der Vektor $\Delta \underline{a} - H_1 \Delta\hat{\underline{\Phi}}$ von dem Summierpunkt 36 wird mit einer Matrix $K_1$ multipliziert, wie durch einen Block 40 dargestellt ist. Der so erhaltene Vektor wird unmittelbar auf einen "Summierpunkt" 42 aufgeschaltet. Weiterhin wird der Vektor $\Delta \underline{a} - H_1 \Delta\hat{\underline{\Phi}}$ mit einer Matrix $K_2$ multipliziert, die durch einen Block 44 dargestellt ist. Der so erhaltene Vektor wird integriert, was durch einen Block 46 dargestellt ist. Das Integral liefert einen Schätzwert für die Nullpunktfehler der auf die Winkelgeschwindigkeit ansprechenden Sensoren des Tochternavigationssystems, also den Vektor $\hat{\underline{B}}$ mit den Komponenten $\hat{B}_x$, $\hat{B}_y$ und $\hat{B}_z$. Dieser Schätzwert $\hat{\underline{B}}$ wird mit einer Matrix $F_{12}$ multipliziert, die durch einen Block 48 dargestellt ist. Die Matrix $F_{12}$ entspricht der vierten bis sechsten Spalte in den ersten drei Zeilen der Matrix in der Zustandsgleichung (1). Die Elemente in der Diagonale der Matrix $F_{12}$ sind "-1", die übrigen Elemente sind "0". Der durch die Multiplikation $F_{12} \cdot \hat{\underline{B}}$ erhaltene Vektor ist ebenfalls auf den "Summierpunkt" 42 aufgeschaltet. Schließlich wird der Vektor $\Delta \underline{a} - H \cdot \Delta\underline{\Phi}$ mit einer Matrix $K_3$ multipliziert, die durch einen Block 50 dargestellt ist. Der so erhaltene Vektor wird integriert, was durch einen Block 52 dargestellt ist. Die Integration liefert einen Schätzwert $\hat{\underline{DSF}}$ für den Vektor $\underline{DSF}$ der Skalenfaktorfehler $DSF_x$, $DSF_y$ und $DSF_z$ der auf Winkelgeschwindigkeit ansprechenden Sensoren des Tochternavigationssystems 12. Dieser Schätzwert $\hat{\underline{DSF}}$ wird mit einer Matrix $F_{13}$ multipliziert, die durch einen Block 54 dargestellt ist. Die Matrix $F_{13}$ wird von der siebten bis neunten Spalte in den ersten drei Reihen der Matrix in der Zustandsgleichung (1) gebildet. Auch der so erhaltene Vektor ist auf den "Summierpunkt" 42 aufgeschaltet. Die Vektorsumme an dem Summierpunkt 42 bildet den Ausgang des optimalen Schätzers 38. Dieser Ausgang ist wiederum auf den "Summierpunkt" 26 aufgeschaltet.

Die Anordnung nach Fig. 2 stellt ein Modell der Zustandsgleichung (1) dar:
Im "Summatationspunkt" 26 werden addiert einmal der Vektor $F_{11} \cdot \Delta\hat{\underline{\Phi}}$ und weiterhin $F_{12} \cdot \hat{\underline{B}}$ und $F_{13}\hat{\underline{DSF}}$. Weiterhin wird auf den Eingang 24 der Vektor $u_1$ der Differenz der gemessenen Winkelgeschwindigkeiten aufgeschaltet. Aus der Zustandsgleichung (1) ergibt sich, daß an dem Summatationspunkt 26 -abgesehen von dem Rauschanteil - der Vektor

$$\dot{\hat{\underline{\Delta \Phi}}}$$

gebildet wird. Durch Integration gemäß Block 30 ergibt sich daraus der Schätzwert

$$\hat{\underline{\Delta \Phi}} \quad .$$

Dieser Vektor

$$\hat{\underline{\Delta \Phi}}$$

wird gemäß der Meßgleichung (2) mit der Meßmatrix $H_1$ multipliziert. Es werden dadurch Größen gebildet, die bestimmten beobachtbaren Größen analog sind und, wenn die Schätzwerte

$$\hat{\underline{\Delta \Phi}}$$

der Realität entsprächen, diesen beobachtbaren Größen gleich wären. Im vorliegenden Falle sind das die Differenzen der Komponenten der Beschleunigungen, die in dem Tochternavigationssystem und in dem Mutternavigationssystem gemessen werden. Die beobachtbaren Größen werden von dem Vektor $\Delta \underline{a}$ gebildet. Aus dem Schätzwert

$$\hat{\underline{\Delta \Phi}}$$

der Lagewinkel und den als fehlerfrei angenommenen Komponenten der Beschleunigung, welche die Elemente des Meßvektors $H_1$ bilden, wird ein Vektor gebildet, der angibt, wie diese Beschleunigungsdifferenzen für den Schätzwert

$$\hat{\Delta \vartheta}$$

der Lagewinkel aussehen müßte. Wenn an dem "Summierpunkt" 34 eine Differenz auftritt, dann stimmt der Schätzwert

$$\hat{\Delta \psi}$$

nicht mit der Realität überein.

Der optimale Schätzer 38 stellt nun eine Art Regler dar, auf den diese Differenz als "Regelabweichung" aufgeschaltet ist und der über die "Stellglieder" mit den Matrizen 40 sowie 44 bzw. 50 und den Integratoren 46,52 die Regelabweichung durch Variation von $\hat{B}$ und $\overline{DSF}$ zum Verschwinden bringt. Wenn ein solcher Abgleich gelungen ist, dann liefert das System, weil es ein Modell der "realen Welt" darstellt, nicht nur einen guten Schätzwert

$$\hat{\Delta \Phi}$$

für den Vektor $\Delta \Phi$ der Lagewinkel sondern an Ausgängen 56 und 58 auch Schätzwerte $\hat{B}$ und $\overline{DSF}$ für die Vektoren der Nullpunktfehler B und der Skalenfaktorfehler DSF. Diese "Regelvorgänge" erfolgen zyklisch mit einer bestimmten Frequenz. Der Abstand zwischen zwei solchen "Regelvorgängen" bezeichnet man als Filter-Updateintervall.

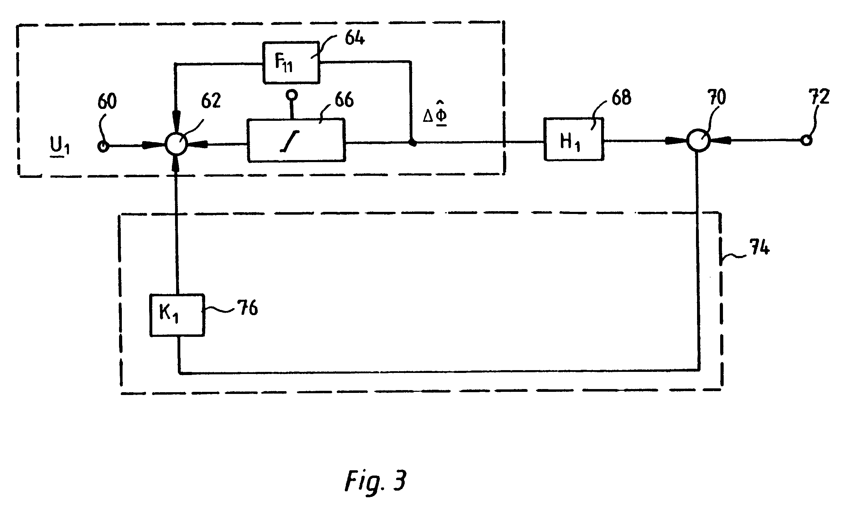

Fig. 3 zeigt die Struktur des Kalmanfilters 20.

An einem Eingang 60 erscheint wieder ein Vektor $u_1$ von der Form der Gleichung (7), wobei allerdings die Winkelgeschwindigkeitswerte von dem Tochternavigationssystem durch die Signalverarbeitungsmittel 22 hinsichtlich der Sensorfehler korrigiert sind, wie im Zusammenhang mit Fig.1 beschrieben wurde. Diesem Vektor $u_1$ ist in einem "Summierpunkt" 62 ein mit der oben schon definierten Matrix $F_{11}$ multiplizierter Schätzwert $\Delta \hat{\Phi}$ des Vektors $\Delta \Phi$ der relativen Lagewinkel überlagert. Die Matrix $F_{11}$ ist durch einen Block 64 dargestellt. Der an dem Summierpunkt 62 erhaltene Vektor wird integriert. Das ist durch Block 66 dargestellt. Dadurch wird der besagte Schätzwert $\hat{\Phi}$ der Lagewinkel erhalten. Der Schätzwert $\Delta \hat{\Phi}$ wird mit der Meßmatrix $H_1$ gemäß Gleichung (6) multipliziert. Das ist durch Block 68 dargestellt. Der so erhaltene Vektor wird in einem Summierpunkt 70 von dem Vektor $\Delta$ a subtrahiert, der an einem Eingang 72 anliegt. Die Differenz liefert die Eingangsgröße für den optimalen Schätzer 73.

Insoweit liegt in Fig. 3 die gleiche Struktur vor wie in Fig.2.

Der Vektor $\Delta a - H_1 \cdot \Delta \hat{\Phi}$ von dem Summierpunkt 70 wird mit einer Matrix $K_1$ multipliziert, wie durch einen Block 76 dargestellt ist. Der so erhaltene Vektor wird unmittelbar auf den Summierpunkt 62 aufgeschaltet.

Die Anordnung nach Fig.3 stellt ein Modell der Zustandsgleichung (4) dar: Im Summierpunkt 62 wird der Schätzwert

$$\hat{\Delta \Phi}$$

der Lagewinkel, der mit der Matrix $F_{11}$ multipliziert ist, zu dem Vektor $u_1$ addiert, der von der Differenz der im Tochternavigationssystem und im Mutternavigationssystem gemessenen Winkelgeschwindigkeiten $\omega_{IS}^{S}$ bzw. $\omega_{IM}^{M}$ gebildet ist. Das sind die beiden ersten Terme auf der rechten Seite der Zustandsgleichung (4). Abgesehen von dem Rauschanteil ergibt dies die Änderung

$$\hat{\Delta \vartheta}$$

des Vektors der Lagewinkel $\overline{\phi}$, $\overline{\vartheta}$, $\overline{\psi}$. Diese Änderung wird integriert und liefert den Schätzwert

$$\hat{\Delta \psi}$$

der Lagewinkel. Dieser Schätzwert

$$\hat{\underline{\Delta} \dot{\varphi}}$$

wird mit der Meßmatrix $H_1$ multipliziert und der so erhaltene Vektor (analog zu Fig.2) mit der Differenz $\Delta$ a der Beschleunigungen verglichen. Bei Auftreten einer solchen Differenz wird über die Matrix $K_1$ die gemäß Block 66 zu integrierende Größe verändert. Über die Integration wird der Schätzwert

$$\hat{\underline{\Delta} \Phi}$$

verändert, bis die Differenz am Summierpunkt 70 verschwindet.

Auch hier stellt der optimale Schätzer eine Art Regler dar, der über das "Stellglied" 76 die "Regelabweichung" am Summierpunkt 70 zum Verschwinden bringt. Auch dies geschieht in bestimmten "Filter-Updateintervallen".

Das Kalmanfilter 20 gemäß Fig.3 ist ein Kalmanfilter dritter Ordnung und liefert als Schätzwert nur einen Vektor mit drei Komponenten, nämlich den drei relativen Lagewinkeln.

In dem ersten Kalmanfilter 18 sind die Intervalle zwischen zwei aufeinanderfolgenden Verarbeitungszeitpunkten von Beschleunigungsmeßwerten, also die "Filter-Updateintervalle" gegenüber den entsprechenden Intervallen des zweiten Kalmanfilters wesentlich verlängert. Während z.B. in dem Fall Flugzeug mit Flugkörper an der Tragfläche die Filter-Updatefrequenzen, also die Frequenzen, mit denen der optimale Schätzer 74 in Fig.3 die Beschleunigungsmeßwerte verarbeitet, für das Kalmanfilter 20 bei 50 bis 100 Hertz liegt, liegen die Filter-Updateintervalle des Kalmanfilters 18 bei 10 Sekunden, die Filter-Updatefrequenzen also bei 0,1 Hertz.

Diese Arbeitsweise trägt der Tatsache Rechnung, daß einerseits eine hohe Filter-Updatefrequenz erforderlich ist, um sinnvolle Aussagen über die relativen Lagen von Tochternavigationssystem 12 und Mutternavigationssystem 10 zu erhalten. Wenn z.B. die beiden Navigationssysteme mit der Eigenfrequenz der Tragflächen eines Flugzeugs von 8 bis 10 Hertz gegeneinander schwingen, liefert eine Schätzung der Lagewinkel in Intervallen von 10 Sekunden keine sinnvolle Aussage über die momentanen Lagewinkel. Eine Filter-Updatefrequenz von 50 bis 100 Hertz würde wiederum nur eine sehr unsichere Schätzung der Fehlerparameter der Sensoren erlauben, dainnerhalb der Kurzen Filter-Updateintervalle sich diese Fehlerparameter nur außerordentlich wenig auf die Lagewinkel und damit auf die "Regelung" auswirken. Es sind daher die zwei mit unterschiedlichen Filter-Updatefrequenzen arbeitenden Kalmanfilter 18 und 20 vorgesehen. Das "langsame" Kalmanfilter 18 liefert hinreichend genaue Schätzwerte $\hat{\underline{B}}$ und $\hat{D\underline{S}F}$ für die Sensorfehler. Es liefert zwangsläufig Schätzwerte für die Lagewinkel, die aber keine sinnvolle Aussage über die jeweils momentanen Lagewinkel ergeben. Das "schnelle" Kalmanfilter liefert aktuelle Schätzwerte für die Lagewinkel. Es ist gar nicht zur Erzeugung von Schätzwerten für die Sensorfehler eingerichtet. Die Sensorfehler des Tochternavigationssystems 20 werden durch die Signalverarbeitungsmittel 22 in Fig.1 aufgrund der von dem langsamen, ersten Kalmanfilter 18 ermittelten Schätzwerte $\hat{\underline{B}}$ und $\hat{D\underline{S}F}$ schon kompensiert, bevor die Winkelgeschwindigkeit $\underline{\omega}\,{}^{S}_{iS}$ des Tochternavigationssystems $1\overline{2}$ auf d$\overline{as}$ schnelle, zweite Kalmanfilter 20 aufgeschaltet wird.

Die beiden Kalmanfilter 18 und 20 sind in ihrer Struktur ähnlich.

Es kann, z.B bei der Anwendung mit einem in einem Flugzeug angeordneten Mutternavigationssystem 10 und einem Tochternavigationssystem 12 in einem von dem Flugzeug getragenen Flugkörper, zunächst mit dem Kalmanfilter 18 gearbeitet werden. Dadurch werden die Schätzwerte der Sensorfehler $\hat{\underline{B}}$ und $\hat{D\underline{S}F}$ bestimmt. Kurz vor der Initialisierungsphase des Tochternavigationssystems 12 erfolgt eine Umschaltung auf das Kalmanfilter 20. Das ist in Fig.1 durch einen Schalter 78 angedeutet. Dadurch wird sichergestellt, daß für die Initialisierung des Tochternavigationssystems die aktuellen, momentanen Lagewinkel des Tochternavigationssystems zur Verfügung stehen.

Wegen der Strukturähnlichkeit der beiden Kalmanfilter 18 und 20 können für das Kalmanfilter 20 Filtergleichungen des Kalmanfilters 18 verwendet werden. Dadurch kann der Realisierungsaufwand insgesamt entscheidend verringert werden.

**Ansprüche**

1. Einrichtung zur Bestimmung der zeitlich veränderlichen relativen Lage eines Mutter- und eines Tochternavigationssystems (10, 12), die beide Trägheitssensoren zur Beschleunigungs- und Winkelgeschwindigkeitsmessung aufweisen, und zur Bestimmung von Sensorfehlern des Tochternavigationssystems (12), enthaltend

   a) ein erstes Filter (18), auf welches

   - die Differenzen ($\underline{\Delta}$a) der in Mutter- und Tochternavigationssystem gemessenen Beschleunigungen,
   - die im Mutternavigationssystem (10) gemessenen Winkelgeschwindigkeiten ($\omega_{IM}^{M}$) und
   - die im Tochternavigationssystem (12) gemessenen Winkelgeschwindigkeiten

$$( \underline{\overline{\omega}}_{IS}^{S} )$$

   aufgeschaltet sind und welches

   - Schätzwerte ($\hat{\underline{B}}$, $\hat{\underline{DSF}}$) für Fehlerparameter des Tochternavigationssystem (12) verglichen mit dem Mutternavigationssystem (10)
   liefert, und

   b) ein als Kalmanfilter ausgebildetes zweites Filter (20), auf welches

   - die Differenzen ($\underline{\Delta}$a) der in Mutter- und Tochternavigationssystem (10, 12) gemessenen Beschleunigungen,
   - die im Mutternavigationssystem (10) gemessenen Winkelgeschwindigkeiten ($\omega_{IM}^{M}$) und
   - Winkelgeschwindigkeitswerte aufgeschaltet sind, welche aus den in Tochternavigationssystem (12) gemessenen Winkelgeschwindigkeiten

$$( \underline{\overline{\omega}}_{IS}^{S} )$$

   abgeleitet sind
   und welches
   - Schätzwerte

$$( \underline{\Delta} \hat{\Phi} )$$

   für die Lageparameter des Tochternavigationssystems (12) relativ zu dem Mutternavigationssystem (10)
   liefert
   **dadurch gekennzeichnet, daß**
   c) das erste Filter (18) ebenfalls als Kalmanfilter ausgebildet ist und
   d) in dem ersten Kalmanfilter (18) die Intervalle zwischen zwei aufeinanderfolgenden Verarbeitungszeitpunkten von Beschleunigungsmeßwerten gegenüber den entsprechenden Intervallen des zweiten Kalmanfilters (20) wesentlich verlängert sind.

2. Einrichtung nach Anspruch 1, dadurch gekennzeichnet, daß Mittel (22) zur Sensorfehlerkompensation vorgesehen sind, auf welche

   - die im Tochternavigationssystem (12) gemessenen Winkelgeschwindigkeiten

$$( \underline{\overline{\omega}}_{IS}^{S} )$$

   und
   - die von dem ersten Kalmanfilter (18) gelieferten Schätzwerte ($\hat{\underline{B}}$, $\hat{\underline{DSF}}$) für die Fehlerparameter des Tochternavigationssystems (12)
   aufgeschaltet sind und welche

- die besagten verbesserten Winkelgeschwindigkeitswerte liefert, die aus den im Tochternavigationssystem (12) gemessenen Winkelgeschwindigkeiten abgeleitet und auf das zweite Kalmanfilter (20) aufgeschaltet sind.

## Claims

1. Device for determining the time-variable relative positions of a master and a slave navigation system (10, 12) both having inertial sensors for acceleration and angular rate measurements, and for determining sensor errors of the slave navigation system (12), comprising

    (a) a first filter (18) to which are applied
    - the differences ($\triangle a$) of the accelerations measured in master and slave navigation systems,
    - the angular rates ($\overline{\omega}_{IM}^{M}$ measured in the master navigation system (10), and
    - the angular rates

$$(\overline{\omega}_{IS}^{S})$$

measured in the slave navigation system (12),
and which provides
    - estimated values

$$(\hat{B}, \quad \widehat{DSF})$$

of error parameters of the slave navigation system (12) as compared to the master navigation system (10), and

    (b) a second filter (20) formed as Kalman filter, to which are applied
    - the differences ($\triangle a$) of the accelerations measured in master and slave navigation systems (10, 12),
    - the angular rates ($\omega_{IM}^{M}$) measured in the master navigation system (10), and
    - angular rate values derived from the angular rates

$$(\overline{\omega}_{IS}^{S})$$

measured in the slave navigation system (12),
and which provides
    - estimated values

$$(\hat{\triangle\phi})$$

of the position parameters of the slave navigation system (12) relative to the master navigation system (10),
    **characterized in that**
    (c) the first filter (18) is also formed as Kalman filter, and
    (d) in the first Kalman filter, the intervals between two consecutive processing times of acceleration measuring values are considerably prolonged as compared to the corresponding intervals of the second Kalman filter (20).

2. Device as set forth in claim 1, characterized in that means (22) for sensor error compensation are provided, to which are applied
    - the angular rates

13

$$(\overline{\omega}_{IS}{}^{S})$$

measured in the slave navigation system (12), and
- the estimated values

$$(\hat{\underline{B}}, \quad \hat{\underline{DSF}})$$

provided by the first Kalman filter (18) for the error parameters of the slave navigation system (12), and which
- provide the said improved angular rate values derived from the angular rates measured in the slave navigation system (12) and applied to the second Kalman filter (20).

**Revendications**

1. Dispositif déstiné à déterminer les orientations relatives variables dans le temps d'un système-mère de navigation et d'un système de navigation à répétition (10, 12) ayant tous les deux des détecteurs d'inertie pour le mesure de l'accélération et de la vitesse angulaire, et à déterminer des erreurs de détecteur du système de navigation à répétition (12), comprenant
   (a) un premier filtre (18) auquel sont appliqués
   - les différences ($\Delta a$) des accélérations mesurées dans le système-mère et le système de navigation à répétition,
   - les vitesses angulaires ($\underline{\omega}_{iM}^{M}$) mesurées dans le système-mère de navigation (10), et
   - les vitesses angulaires

$$(\overline{\omega}_{IS}^{S})$$

   mesurées dans le système de navigation à répétition (12)
   et qui fournit
   - des valeurs estimatives

$$(\hat{\underline{B}}, \quad \hat{\underline{DSF}})$$

   pour des paramètres d'erreur du système de navigation à répétition (12) en comparaison au système-mère de navigation (10), et
   (b) un second filtre (20) formé comme filtre Kalman, auquel sont appliqués
   - les différences ($\Delta a$) des accélérations mesurées dans le système-mère et le système de navigation à répétition (10, 12),
   - les vitesses angulaires ($\underline{\omega}_{iM}^{M}$) mesurées dans le système-mère de navigation (10), et
   - des valeurs de vitesse angulaire dérivées des vitesses angulaires

$$(\overline{\omega}_{IS}^{S})$$

   mesurées dans le système de navigation à répétition (12),
   et qui fournit
   - des valeurs estimatives

14

EP 0 276 663 B1

$$(\hat{\underline{\Delta \Phi}})$$

pour des paramètres d'orientation du système de navigation à répétition (12) relativement au système-mère de navigation (10),

caractérisé par le fait que

(c) le premier filtre est également formé comme filtre Kalman, et

(d) dans le premier filtre Kalman (18) , les intervalles entre deux moments de traitement de valeurs d'accélération sont considérablement prolongés par rapport aux intervalles correspondants du second filtre Kalman (20).

2. Dispositif selon la revendication 1, caractérisé par le fait que des moyens (22) déstinés à la compensation d'erreurs de détecteur sont prévus, auxquels sont appliqués

- les vitesses angulaires

$$(\underline{\bar{\omega}}\, \underline{\overset{s}{IS}}\, )$$

mesurées dans le système de navigation à répétition (12), et

- les valeurs estimatives

$$(\hat{\underline{B}},\ \hat{\underline{DSF}})$$

mesurées par le premier filtre Kalman (18) pour les paramètres d'erreur du système de navigation à répétition (12),

et qui fournissent

- lesdites valeurs de vitesse angulaire améliorées dérivées des vitesses angulaires mesurées dans le système de navigation à répétition (12) et appliquées au second filtre Kalman (20).

15

Fig.1

EP 0 276 663 B1

Fig. 2

*Fig. 3*

EP 0 276 663 B1